# EUROPEAN PATENT SPECIFICATION

(11) **EP 4 383 745 B1**
(45) Date of publication and mention of the grant of the patent: **04.11.2026**
(21) Application number: 21923627.0
(22) Date of filing: 24.12.2021
(51) Int. Cl.: G06F 3/16, H04Q 9/00, H04L 12/28, G06F 3/0482, G06F 3/14

(54) **PRESENTING SYSTEM THAT ACCEPTS TURNING OFF OF NOTIFICATIONS**
PRÄSENTATIONSSYSTEM, DAS DAS ABSCHALTEN VON BENACHRICHTIGUNGEN ERHÄLT
SYSTÈME DE PRÉSENTATION QUI ACCEPTE UNE DÉSACTIVATION DE NOTIFICATIONS

(30) Priority: 05.08.2021 JP 2021129341
(43) Date of publication of application: 12.06.2024
(73) Proprietor: Panasonic Intellectual Property Management Co., Ltd., Osaka-shi, Osaka 540-6207 (JP)
(72) Inventor: TORIKAI, Masafumi, Osaka-shi, Osaka 540-6207 (JP); URABE, Hiroki, Osaka-shi, Osaka 540-6207 (JP); IKEUCHI, Hiromu, Osaka-shi, Osaka 540-6207 (JP)
(74) Representative: Novagraaf International SA
(86) International application number: PCT/JP2021/048437
(87) International publication number: WO 2023/013095

(56) References cited:
- WO-A1-2014/103309
- JP-A- 2016 076 799
- JP-A- 2017 151 394
- JP-A- 2020 153 219
- JP-B2- 6 721 446
- US-A1- 2019 342 251

## Description

### [Technical Field]

The present disclosure relates to a presentation system, an information terminal, and a presentation method.

### [Background Art]

Patent Literature (PTL) 1 discloses a household electric appliance having an utterance function in which sound source data is reproduced to thereby output voice. The household electric appliance of this type reproduces voice that indicates a detail of its state, at a timing when the state of the household electric appliance is changed. Accordingly, a user recognizes that the state of the household electric appliance is changed.

### [Citation List]

### [Patent Literature]

[PTL 1]
Japanese Unexamined Patent Application Publication No. 2008-46424

The document JP 2016 076799 discloses a presentation system reflecting the preamble of present claim 1.

Further art is disclosed by the document JP 6 721446.

### [Summary of Invention]

### [Technical Problem]

However, it is difficult for a user to easily set to turn off a notification that is notified by, for example, reproducing voice, in a conventional technique represented by PTL 1.

The present disclosure provides, for example, a presentation system that allows a user to easily set to turn off a notification.

### [Solution to Problem]

A presentation system according to claim 1.

A presentation method according to claim 10.

It should be noted that these comprehensive or specific aspects may be embodied by a device, a method, an integrated circuit, a computer program, or a non-temporal computer-readable recording medium such as a CD-ROM, or may be embodied by any combination of the device, the method, the integrated circuit, the computer program, and the recording medium.

### [Advantageous Effects of Invention]

According to a presentation system of the present disclosure, a user can easily set to turn off a notification.

### [Brief Description of Drawings]

[FIG. 1]

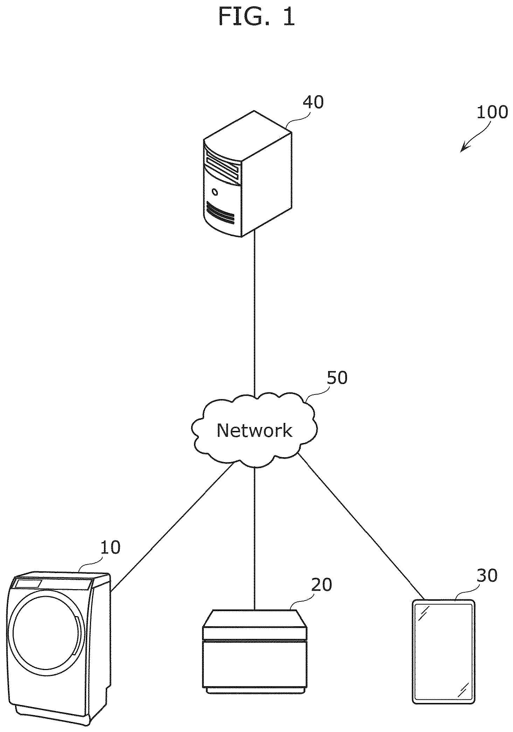

   FIG. 1 is a diagram showing an outline of a presentation system according to an embodiment.
[FIG. 2]

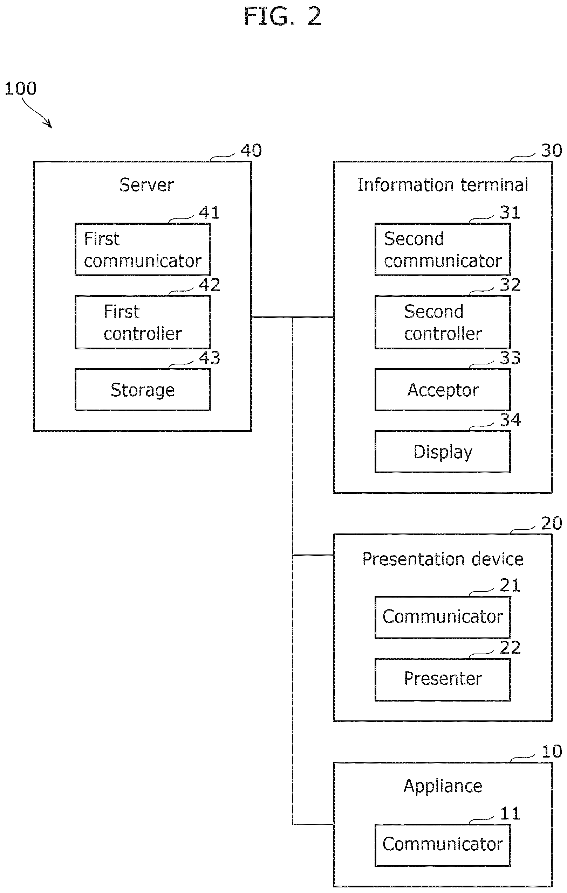

   FIG. 2 is a block diagram showing a functionality configuration of the presentation system according to the embodiment.
[FIG. 3]

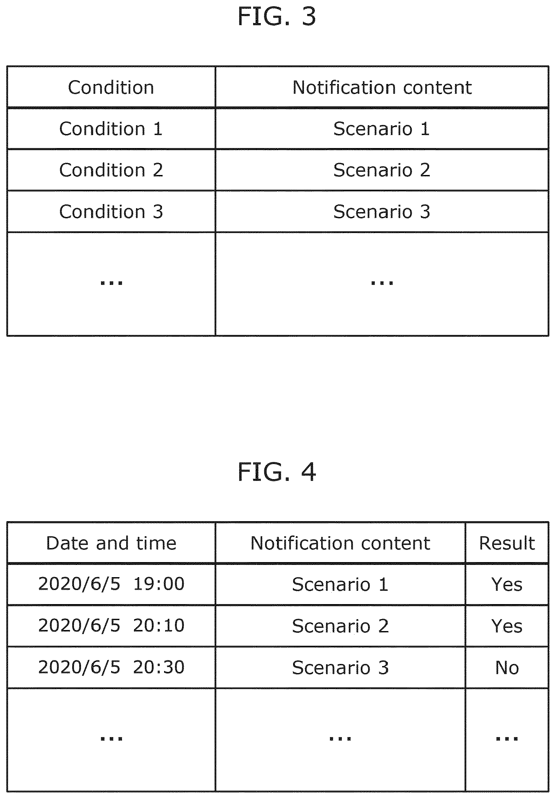

   FIG. 3 is a diagram showing an example of association information.
[FIG. 4]
   FIG. 4 is a diagram showing an example of a history.
[FIG. 5]

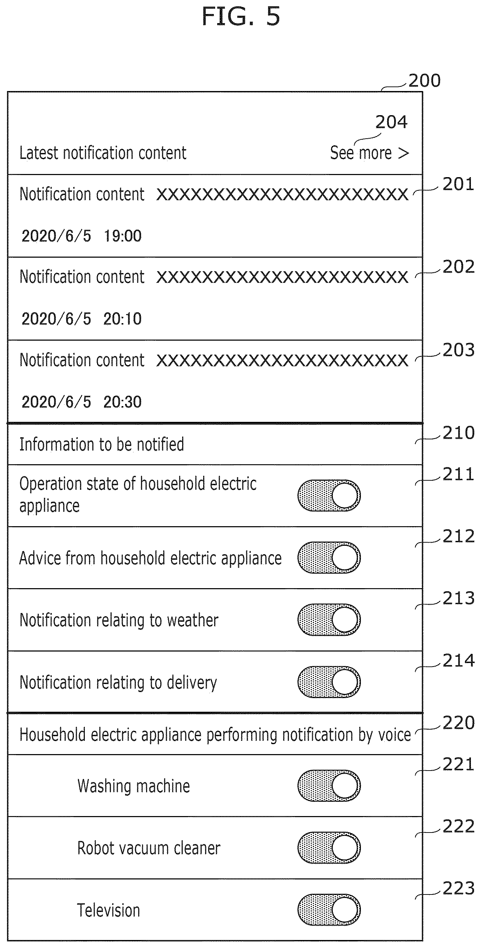

   FIG. 5 is a diagram showing a specific example of a UI.
[FIG. 6]

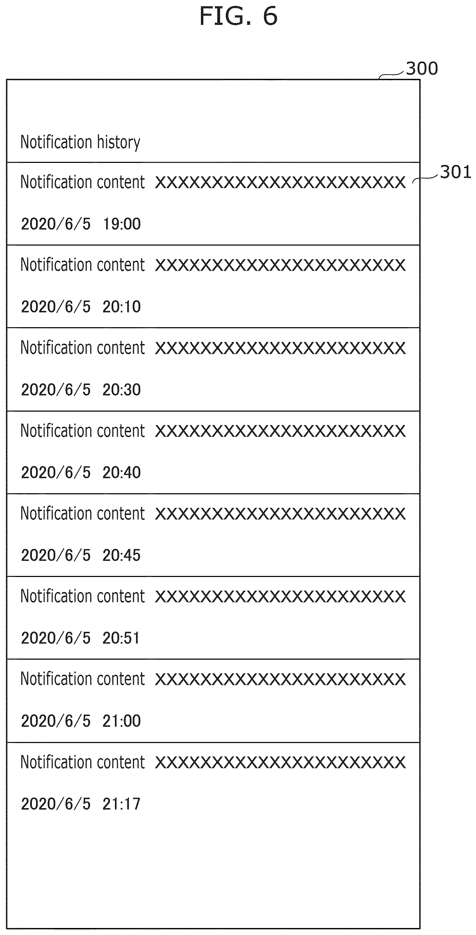

   FIG. 6 is a diagram showing a specific example of the UI.
[FIG. 7]

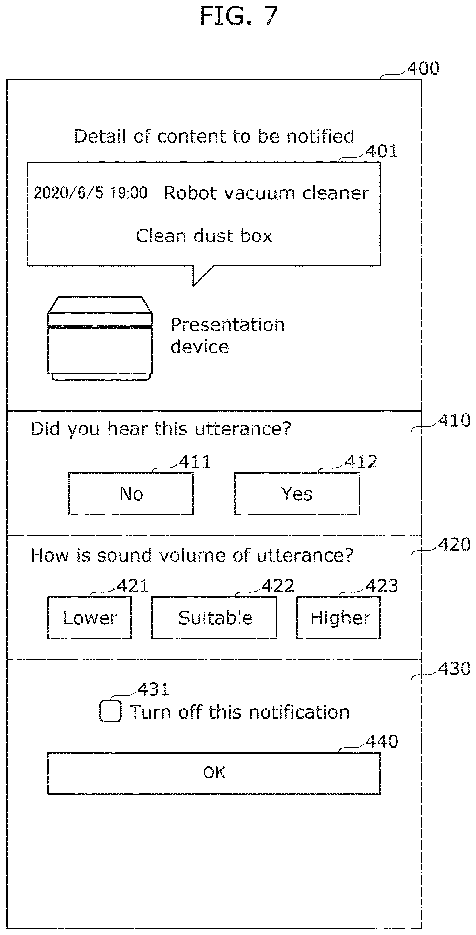

   FIG. 7 is a diagram showing a specific example of the UI.
[FIG. 8]

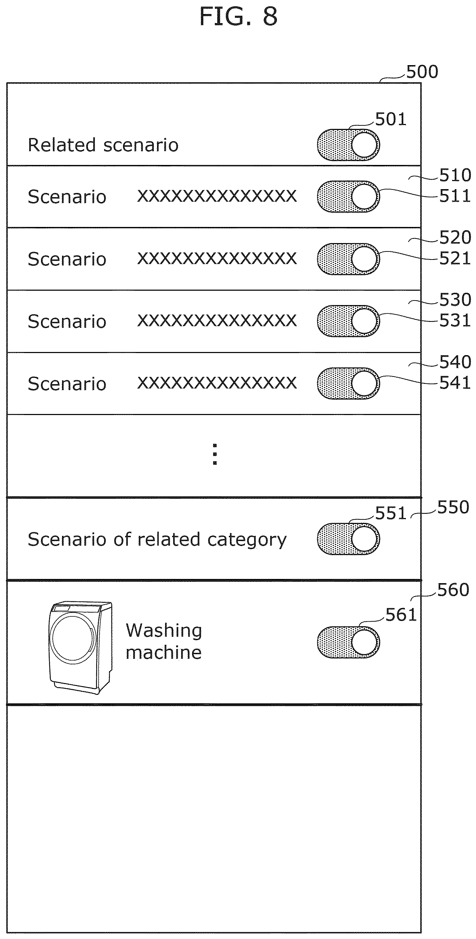

   FIG. 8 is a diagram showing a specific example of the UI.
[FIG. 9]

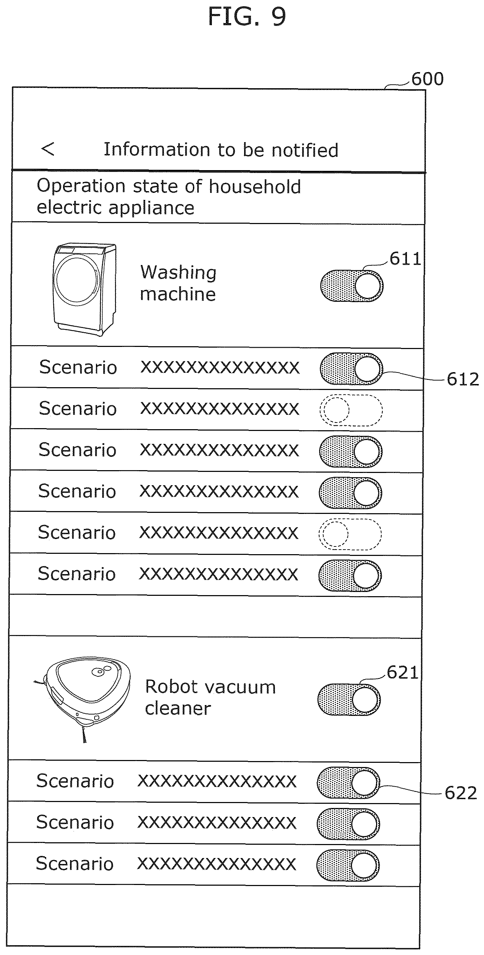

   FIG. 9 is a diagram showing a specific example of the UI.
[FIG. 10]

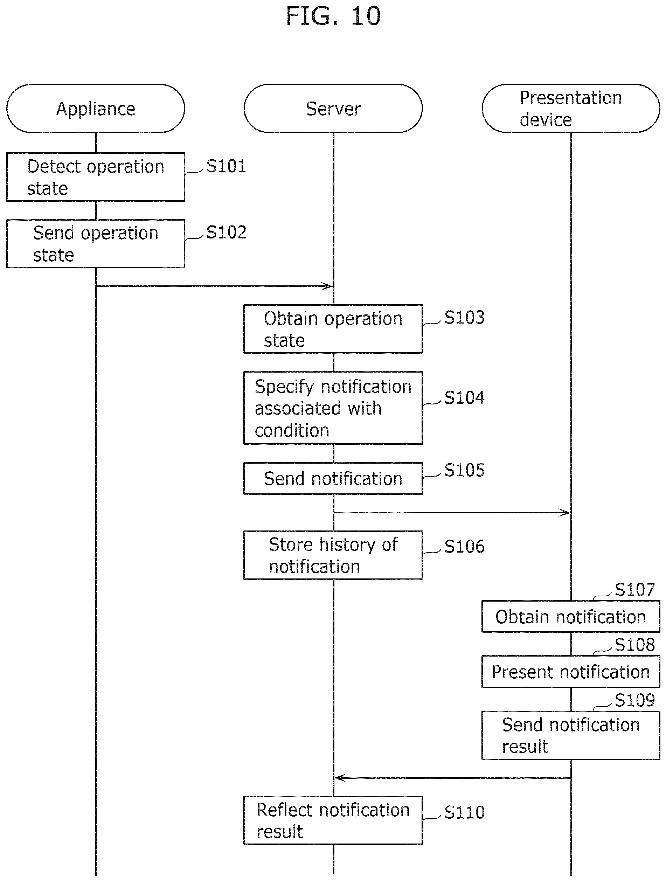

   FIG. 10 is a sequence diagram showing presentation processing performed by a presentation system.
[FIG. 11]

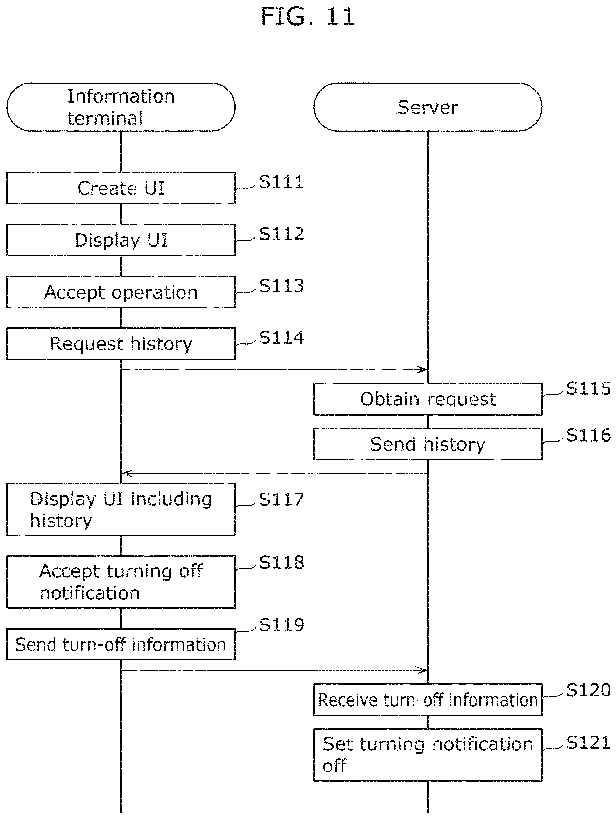

   FIG. 11 is a sequence diagram showing notification setting processing performed by the presentation system.
[FIG. 12]

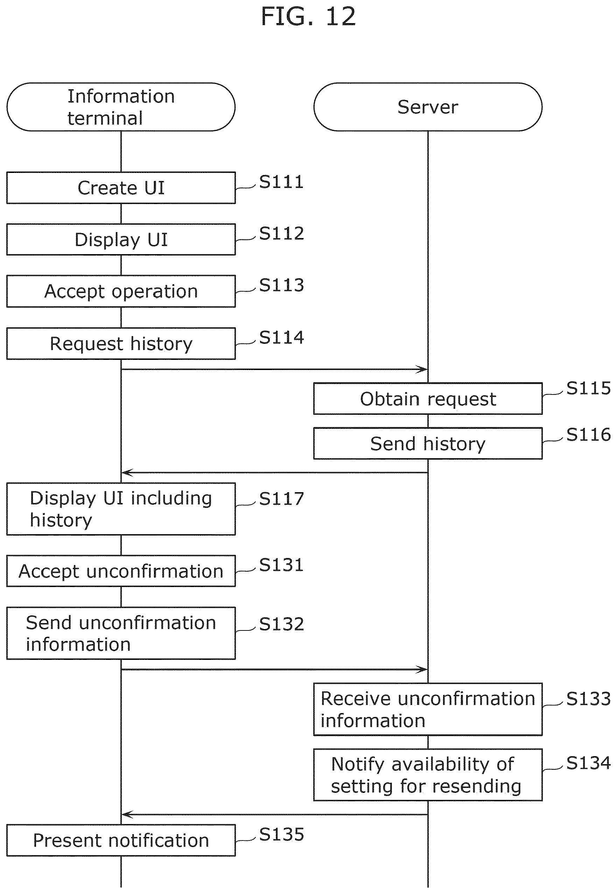

   FIG. 12 is a sequence diagram showing unconfirmation inquiry processing performed by the presentation system.
[FIG. 13]

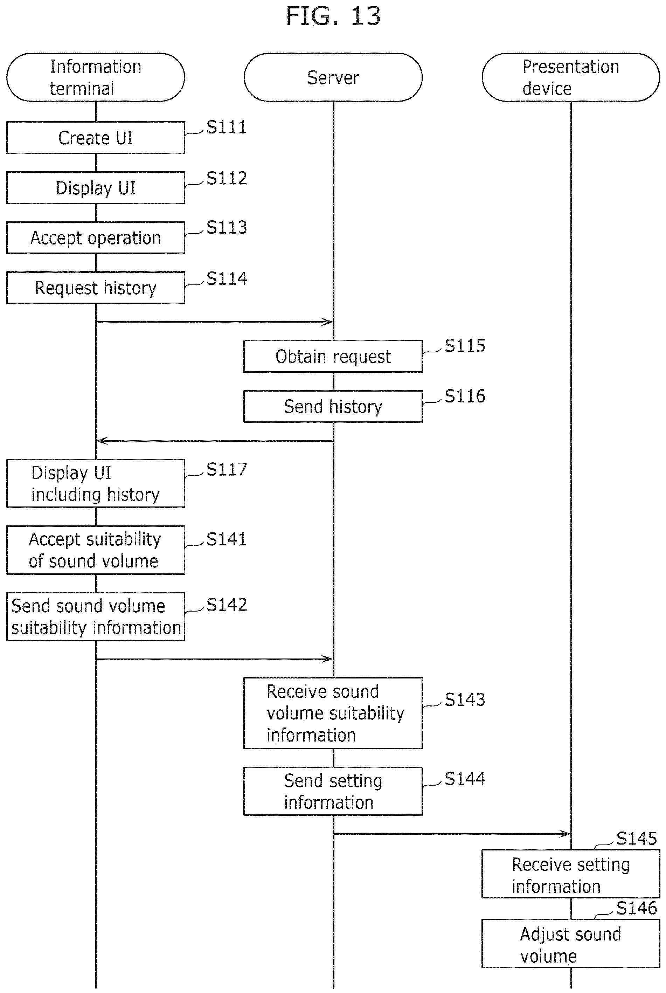

   FIG. 13 is a sequence diagram showing sound volume adjustment processing performed by the presentation system.

### [Description of Embodiments]

### (Knowledge underlying the present disclosure)

The present inventors have found problems as described below, in techniques described in "Background Art" of the description.

It has been required for the conventional technique to easily set notification to a user to be turned off. In order to set the notification to be turned off, a user is required to specify a notification that the user wants to turn off among various notifications. Accordingly, it is necessary for a user to perform operation for specifying the notification that the user wants to turn off, onto a terminal that accepts the setting. The terminal that has accepted the operation is required to perform processing in response to the operation. As mentioned above, a user is required to specify, with labor, the notification that the user wants to turn off, and a processing load for executing the processing is applied to the terminal.

In view of the above, the present inventors have found, for example, a presentation system that allows a user to easily set a notification to be turned off, as a result of earnest investigation.

Hereinafter, embodiments are described in detail, with appropriate reference to the drawings. Here, unnecessarily detailed description may be omitted. For example, detailed description for well-known matters and duplicate description for substantially the same configuration may be omitted. This prevents the below description from becoming unnecessarily redundant, to facilitate the understanding by a person skilled in the art.

It should be noted that the inventors of the present disclosure provide the accompanying drawings and the description below for a person skilled in the art to sufficiently understand the present disclosure, and thus do not intend to limit the subject matters recited in the scope of claims, by the drawings and the description.

### (Embodiment)

### [1. Outline of presentation system]

An outline of the presentation system according to an embodiment is described with reference to FIG. 1. FIG. 1 is a diagram showing the outline of the presentation system according to the embodiment.

As shown in FIG. 1, presentation system 100 according to the embodiment includes appliance 10, presentation device 20, information terminal 30, and server 40. Appliance 10, presentation device 20, information terminal 30, and server 40 are connected to one another via network 50 in a communicable manner. Network 50 may be a general line, such as the Internet, or may be a dedicated line. It should be noted that appliance 10 and presentation device 20 may be provided in the same house of a user, for example.

Appliance 10 is a household electric appliance to be used by a user and is a washing machine, for example. Appliance 10 sends an operation state of appliance 10 to server 40. For example, appliance 10 may send the operation state to server 40 at regular intervals or may send the operation state to server 40 at a timing when the operation state is changed. Although the description is given, in the present embodiment, based on a case in which appliance 10 is a washing machine, appliance 10 is not limited thereto. Appliance 10 may be an air conditioner, a microwave oven, a refrigerator, a rice cooker, a robot vacuum cleaner, an air cleaner, or any household electric appliance.

Presentation device 20 is a household electric appliance that is used by a user and has an utterance function of outputting voice, and is a smart speaker, for example. Presentation device 20 receives a notification from server 40 via network 50, and presents the notification. Presentation device 20 downloads and obtains sound source data from a sound source distribution server (not shown) based on a sound source uniform resource locator (URL) received from server 40 as a notification, for example. Then, presentation device 20 reproduces the sound source data distributed from the sound source distribution server, so as to output voice. In other words, presentation device 20 presents a notification to a user by outputting voice.

Although the description is given based on a case in which presentation device 20 that presents a notification to a user by outputting voice is a smart speaker in the present embodiment, presentation device 20 is not limited thereto. Presentation device 20 may be a robot vacuum cleaner or any household electric appliance that is equipped with a speaker, for example. Furthermore, presentation device 20 is not limited to present a notification to a user by outputting voice, and may present the notification to a user by displaying a character string or an image (video) on a display. In other words, presentation device 20 may be a television (TV), a smart display, a smartphone, a tablet terminal, or any appliance that is equipped with a display, for example.

Server 40 is a cloud server for controlling an utterance content (notification content) of presentation device 20. Server 40 determines the utterance content of presentation device 20, based on the operation state obtained from appliance 10 and a related status that relates to the operation state. Then, server 40 notifies presentation device 20 of a sound source URL relating to the determined utterance content. Accordingly, the sound source URL corresponds to information for allowing presentation device 20 to output the determined utterance content.

It should be noted that server 40 may send, to presentation device 20, sound source data that indicates the utterance content, instead of sending the sound source URL of the sound source data that indicates the utterance content, to presentation device 20. Furthermore, if presentation device 20 is a device that presents a notification to a user by displaying a character string or an image (video) on a display, server 40 may send a presentation URL for allowing presentation device 20 to access the presentation data indicating the character string or the image (video) that shows the notification content, or may send the presentation data to presentation device 20. When presentation device 20 receives the presentation URL, presentation device 20 may download the presentation data from a presentation data distribution server (not shown) and reproduce the downloaded presentation data, so as to display the character string or the image in the display.

Information terminal 30 serves as an operation terminal that is used by a user for setting the notification from server 40 to presentation device 20 to be turned off. Information terminal 30 creates a UI for accepting an operation performed by a user, accepts the operation performed by the user to the UI, and sends operation information that indicates the accepted operation to server 40. Server 40 changes setting of turning off the notification, according to operation information received from information terminal 30.

### [2. Functionality configuration of presentation system]

Subsequently, a functionality configuration of presentation system 100 according to the embodiment is described with reference to FIG. 2. FIG. 2 is a block diagram showing a functionality configuration of the presentation system according to the embodiment.

### (Appliance)

As shown in FIG. 2, appliance 10 includes communicator 11.

Communicator 11 sends, to server 40, operation information that indicates an operation state of appliance 10. The operation information includes date and time when the operation state is detected, a type of the operation state, the duration during which the operation state continues. Communicator 11 is embodied by a communication interface that can communicably connect to network 50. Specifically, communicator 11 communicably connects to network 50 by communicable connection with a base station of a mobile communication system. Communicator 11 may be embodied by a wireless communication interface that is suitable for a communication standard to be used in the mobile communication system including, for example, a third generation mobile communication system (3G), a fourth generation mobile communication system (4G), long term evolution (LTE: registered trademark), and a fifth generation mobile communication system (5G). Furthermore, communicator 11 may be embodied by a wireless local area network (LAN) interface that is suitable for IEEE 802.11a, b, g, n, ac standard, or may be embodied by a communication interface that is communicably connected to network 50 by communicable connection with an unillustrated router (e.g., a mobile wireless LAN router). Furthermore, communicator 11 may be embodied by a wired LAN interface.

### (Presentation device)

Presentation device 20 includes communicator 21 and presenter 22.

Communicator 21 receives a sound source URL notified by server 40. In addition, communicator 21 downloads sound source data that corresponds to the sound source URL from the sound source distribution server, based on the received sound source URL.

Communicator 21 is embodied by a communication interface that can connect to network 50 in a communicable manner. Specifically, communicator 21 communicably connects to network 50 by communicable connection with a base station of a mobile communication system. Communicator 21 may be embodied by a wireless communication interface that is suitable for the communication standard to be used in a mobile communication system including, for example, the third generation mobile communication system (3G), the fourth generation mobile communication system (4G), the LTE (registered trademark), and the fifth generation mobile communication system (5G). Furthermore, communicator 21 may be embodied by a wireless LAN interface that is suitable for the IEEE 802.11a, b, g, n, ac standard, or may be embodied by a communication interface that is communicably connected to network 50 by communicable connection with an unillustrated router (e.g., the mobile wireless LAN router). Furthermore, communicator 21 may be embodied by a wired LAN interface.

Presenter 22 presents a notification to a user by reproducing voice indicated by sound source data that has been downloaded from the sound source distribution server. Presenter 22 serves as a speaker, for example. Furthermore, presenter 22 is not limited to the presentation of the notification to a user by outputting voice, and may present the notification to a user by displaying a character string or an image (video) in a display. In this case, presenter 22 serves as a display, for example.

### (Server)

Server 40 includes first communicator 41, first controller 42, and storage 43.

First communicator 41 communicates with presentation device 20 via network 50. First communicator 41 is embodied by a communication interface that can communicably connect to network 50. Specifically, first communicator 41 communicably connects to network 50 by communicable connection with a base station of a mobile communication system. First communicator 41 may be embodied by a wireless communication interface that is suitable for the communication standard to be used in a mobile communication system including, for example, the third generation mobile communication system (3G), the fourth generation mobile communication system (4G), the LTE (registered trademark), and the fifth generation mobile communication system (5G). Furthermore, first communicator 41 may be embodied by a wireless LAN interface that is suitable for the IEEE 802.11a, b, g, n, ac standard, or may be embodied by a communication interface that is communicably connected to network 50 by communicable connection with an unillustrated router (e.g., mobile wireless LAN router). Furthermore, first communicator 41 may be embodied by a wired LAN interface.

First controller 42 sends, to presentation device 20 via first communicator 41, a notification that has been associated in advance with a condition satisfied by the operation state of appliance 10, which has been obtained by appliance 10 via network 50. Specifically, first controller 42 compares the obtained operation state of appliance 10 with association information stored in storage 43.

Here, the association information is described with reference to FIG. 3. FIG. 3 is a diagram showing an example of the association information.

As shown in FIG. 3, in the association information, a plurality of conditions and a plurality of notification contents (scenarios) are associated with each other in one-to-one correspondence. Each of the plurality of conditions is defined by: a type of the appliance in which an operation state is generated; a range of the time and date at which the operation state is generated; a type of the operation state; a range of time duration in which the operation state continues; frequencies of the generation of the operation state; the number of times the operation state is generated; a combination of the operation states; and so on. Each of the plurality of notification contents is determined according to the corresponding one of the conditions. For example, the notification content may notify a user of completion of a single operation or a series of operations, of appliance 10, may notify a user of change in a detection state of a sensor included in appliance 10, or may notify a user of occurrence of an error in appliance 10.

First controller 42 refers to the association information stored in storage 43 to specify a condition to be satisfied by the obtained operation state of appliance 10 among a plurality of conditions included in the association information. First controller 42 specifies a notification content, which is associated with the specified condition in the association information, and sends a notification including the notification content to presentation device 20. As described above, the notification may include a sound source URL, may include sound source data, may include a presentation URL, or may include presentation data.

First controller 42 may be embodied by a processor and a memory that stores a program, or may be embodied by a dedicated circuit. In other words, first controller 42 may be embodied by software, or may be embodied by hardware.

Storage 43 stores the association information. Furthermore, storage 43 stores a history of notifications sent to presentation device 20.

Here, the history is described with reference to FIG. 4. FIG. 4 is a diagram showing an example of the history.

As shown in FIG. 4, the history includes date and time at which the notification is sent to presentation device 20, a content that is to be notified and is included in the sent notification, and a result that indicates whether the sent notification is presented by presentation device 20. The history may further include appliance information indicating an appliance from which an operation state is detected. The operation state is included in a condition with which the notification content is associated, in the association information.

Storage 43 is embodied by a non-volatile storage device including, for example, a hard disk drive (HDD) and a solid state drive (SSD).

### (Information terminal)

Subsequently, a functionality configuration of information terminal 30 is described with reference to FIG. 2 again.

Information terminal 30 includes second communicator 31, second controller 32, acceptor 33, and display 34.

Second communicator 31 communicates with server 40 via network 50. Second communicator 31 is embodied by a communication interface that can communicably connect to network 50. Specifically, second communicator 31 communicably connects to network 50 by communicable connection with a base station of a mobile communication system. Second communicator 31 may be embodied by a wireless communication interface that is suitable for the communication standard to be used in a mobile communication system including, for example, the third generation mobile communication system (3G), the fourth generation mobile communication system (4G), the LTE (registered trademark), and the fifth generation mobile communication system (5G). Furthermore, second communicator 31 may be embodied by a local area network (LAN) interface that is suitable for the IEEE 802.11a, b, g, n, ac standard, or may be embodied by a communication interface that is communicably connected to network 50 by communicable connection with an unillustrated router (e.g., a mobile wireless LAN router).

Second controller 32 creates a user interface (UI) for accepting an operation performed by a user. The UI includes a history notified by server 40. Second controller 32 causes display 34 to display the created UI. Second controller 32 obtains a history from server 40 via second communicator 31, and creates the UI including the obtained history. Specifically, the UI created by second controller 32 includes an UI for accepting turning off a notification that is included in the history.

If the operation accepted by acceptor 33 indicates turning off a notification, second controller 32 sends turn-off information that indicates turning off the notification is accepted, to server 40 via second communicator 31. Second controller 32 may be embodied by a processor and a memory that stores a program, or may be embodied by a dedicated circuit. In other words, second controller 32 may be embodied by software, or may be embodied by hardware.

Acceptor 33 accepts an operation performed by a user. Acceptor 33 may be embodied by a touch panel, a touch pad, and so on, or may be embodied by a mouse, a keyboard, and so on.

Display 34 displays the UI created by second controller 32, an image, and so on. Display 34 may be unified with a touch panel.

Here, the UI is described with reference to FIGS. 5 to 9.

FIGS. 5 to 9 are diagrams showing specific examples of the UI.

UI 200 shown in FIG. 5 includes histories 201 to 203, which have been notified by server 40. Histories 201 to 203 included in UI 200 correspond to the predetermined number of notification histories (three in the present embodiment) in the reverse chronological order from the newest notification history, among the notification histories. Histories 201 to 203 includes the notification content and date and time at which the notification is presented by presentation device 20.

UI 200 may include button 204 for switching to UI 300 that includes histories other than histories 201 to 203.

Furthermore, UI 200 includes second UI 210 and second UI 220 for accepting, all together, turning off a plurality of notifications respectively corresponding to a plurality of conditions, from a user.

Second UI 210 includes switches 211 to 214. Each of switches 211 to 214 accepts, all together, turning off a plurality of second notifications each of which is categorized in the corresponding one of the categories, i.e., the second notifications respectively belong to the categories, from a user. A plurality of second notifications each of which belongs to the corresponding one of the categories, are respectively associated with a plurality of second conditions. A plurality of second operation states of appliance 10, which respectively satisfy the plurality of second conditions, are respectively categorized into the categories, i.e., respectively belong to the categories. It should be noted that the categories include the operation state of a household electric appliance, advice from a household electric appliance, weather, and delivery.

Switch 211 accepts, all together, setting of turning on/off a plurality of notifications relating to the operation states of a household electric appliance. When switch 211 is switched to off, second controller 32 sends, to server 40 via second communicator 31, the turn-off information for setting a plurality of notifications relating to the operation states of a household electric appliance to be turned off, at once. When switch 211 is switched to on, second controller 32 sends, to server 40 via second communicator 31, turn-on information for setting a plurality of notifications relating to the operation states of the household electric appliance to be turned on, at once.

Switch 212 accepts, all together, setting of turning on/off a plurality of notifications relating to advice from a household electric appliance. When switch 212 is switched to off, second controller 32 sends, to server 40 via second communicator 31, the turn-off information for setting a plurality of notifications relating to the advice from a household electric appliance to be turned off, at once. When switch 212 is switched to on, second controller 32 sends, to server 40 via second communicator 31, the turn-on information for setting a plurality of notifications relating to the advice from the household electric appliance to be turned on, at once.

Switch 213 accepts, all together, setting of turning on/off a plurality of notifications relating to weather. When switch 213 is switched to off, second controller 32 sends, to server 40 via second communicator 31, the turn-off information for setting a plurality of notifications relating to the weather to be turned off, at once. When switch 213 is switched to on, second controller 32 sends, to server 40 via second communicator 31, the turn-on information for setting a plurality of notifications relating to the weather to be turned on, at once.

Switch 214 accepts, all together, setting of turning on/off a plurality of notifications relating to delivery. When switch 214 is switched to off, second controller 32 sends, to server 40 via second communicator 31, the turn-off information for setting a plurality of notifications relating to the delivery to be turned off, at once. When switch 214 is switched to on, second controller 32 sends, to server 40 via second communicator 31, the turn-on information for setting a plurality of notifications relating to the delivery to be turned on, at once.

First controller 42 of server 40 that has received the turn-off information, sets a plurality of notifications that belong to a category corresponding to the turn-off information to be turned off, at once. Even if server 40 obtains, from appliance 10, an operation state that satisfies one of the plurality of conditions respectively associated with the plurality of notifications indicated to be turned off in the turn-off information, first controller 42 does not send the notification that is associated with the one condition to presentation device 20. Server 40 that has received the turn-on information sets a plurality of notifications that belong to a category corresponding to the turn-on information to be turned on at once. If server 40 obtains from appliance 10 an operation state that satisfies one of the plurality of conditions respectively associated with a plurality of notifications indicated to be turned on in the turn-on information, server 40 sends the notification that is associated with the one condition to presentation device 20.

Second UI 220 includes switches 221 to 223. Each of switches 221 to 223 accepts, all together, turning off a plurality of third notifications each of which is categorized for each appliance, from a user. A plurality of third notifications each of which is categorized to the corresponding one of the appliances are respectively associated with a plurality of third conditions. A plurality of third operation states which are categorized to respective appliances 10 satisfy a plurality of conditions, and are categorized into the appliances. It should be noted that the appliances include a washing machine, an air conditioner, a microwave oven, a refrigerator, a rice cooker, a robot vacuum cleaner, an air cleaner, and so on.

Switch 221 accepts setting of turning on/off a plurality of notifications relating to operation states of a washing machine, at once. When switch 221 is switched to off, second controller 32 sends, to server 40 via second communicator 31, turn-off information for setting the plurality of notifications relating to the operation states of the washing machine to be turned off, at once. When switch 221 is switched to on, second controller 32 sends, to server 40 via second communicator 31, turn-on information for setting the plurality of notifications relating to the operation states of the washing machine to be turned on, at once.

Switch 222 accepts setting of turning on/off a plurality of notifications relating to operation states of a robot vacuum cleaner, at once. When switch 222 is switched to off, second controller 32 sends, to server 40 via second communicator 31, the turn-off information for setting the plurality of notifications relating to the operation states of the robot vacuum cleaner to be turned off, at once. When switch 222 is switched to on, second controller 32 sends, to server 40 via second communicator 31, the turn-on information for setting the plurality of notifications relating to the operation states of the robot vacuum cleaner to be turned on, at once.

Switch 223 accepts setting of turning on/off a plurality of notifications relating to operation states of a television, at once. When switch 223 is switched to off, second controller 32 sends, to server 40 via second communicator 31, the turn-off information for setting the plurality of notifications relating to the operation states of the television to be turned off, at once. When switch 223 is switched to on, second controller 32 sends, to server 40 via second communicator 31, the turn-on information for setting the plurality of notifications relating to the operation states of the television to be turned on, at once.

First controller 42 of server 40 that has received the turn-off information sets a plurality of notifications relating to the appliance to which the turn-off information corresponds to be turned off, at once. Even if server 40 obtains, from appliance 10, an operation state that satisfies one of the plurality of conditions respectively associated with the plurality of notifications indicated to be turned off in the turn-off information, first controller 42 does not send the notification associated with the one condition to presentation device 20. First controller 42 of server 40 that has received the turn-on information sets the plurality of notifications that relate to the appliance corresponding to the turn-on information to be turned on, at once. If server 40 obtains from appliance 10 an operation state that satisfies one of the plurality of conditions respectively associated with the plurality of notifications indicated to be turned on in the turn-on information, first controller 42 sends the notification associated with the one condition to presentation device 20.

When button 204 is pushed, second controller 32 switches UI 200 displayed in display 34 to UI 300.

UI 300 shown in FIG. 6 includes a plurality of histories 301. The plurality of histories 301 includes histories same as histories 201 to 203, and histories of notifications which have been presented by presentation device 20 before histories 201 to 203 are presented.

When a selection of one history 301 among a plurality of histories 301 is accepted, second controller 32 switches UI 300 displayed in display 34 to UI 400.

UI 400 shown in FIG. 7 includes notification 401, third UI 410, forth UI 420, first UI 430, and OK button 440.

Notification 401 indicates a notification content, which is included in one history 301 that has been selected.

Third UI 410 accepts, from a user, whether the user confirms a presented notification. Third UI 410 includes button 411 for accepting from a user that the user does not confirm the presented notification, and button 412 for accepting from a user that the user confirms the presented notification. When OK button 440 is entered under a condition that button 411 has been pushed, i.e., if the operation accepted by acceptor 33 indicates that a user does not confirm a notification, second controller 32 sends, to server 40 via second communicator 31, unconfirmation information indicating that the user does not confirm the notification. When OK button 440 is entered under a condition that button 412 has been pushed, i.e., if the operation accepted by acceptor 33 indicates that the user confirms the notification, second controller 32 sends, to server 40 via second communicator 31, information indicating that the user confirms the notification.

First controller 41 of server 40 that has received the unconfirmation information may send a notification notifying a user of availability of setting for resending the same notification to presentation device 20, to presentation device 20 or information terminal 30.

Fourth UI 420 accepts from a user a sound volume suitability operation that indicates whether a sound volume of a notification presented by voice of presentation device 20 is an optimal volume, higher than the optimal volume, or lower than the optimal volume. Fourth UI 420 includes button 421 for accepting from a user that the sound volume of the notification is lower than the optimal volume, button 422 for accepting from a user that the sound volume is the optimal volume, and button 423 for accepting that the sound volume is higher than the optimal volume. When OK button 440 is entered under a condition that button 421 has been pushed, second controller 32 sends, to server 40 via second communicator 31, sound volume suitability information indicating that an operation showing the sound volume being higher than the optimal volume is accepted. When OK button 440 is entered under a condition that button 422 has been pushed, second controller 32 sends, to server 40 via second communicator 31, the sound volume suitability information indicating that an operation showing the sound volume being optimal is accepted. When OK button 440 is entered under a condition that button 423 has been pushed, second controller 32 sends, to server 40 via second communicator 31, the sound volume suitability information indicating that the operation showing the sound volume being lower than the optimal volume is accepted. Thus, second controller 32 sends, to server 40 via second communicator 31, the sound volume suitability information indicating the sound volume suitability operation accepted by accepter 33.

When the operation showing that the volume is higher than the optimal volume is accepted, according to the sound volume suitability information, first controller 42 of server 40 that has received the sound volume suitability information sends, to presentation device 20, setting information for setting the sound volume of the notification by presentation device 20 to be turned down. When the operation showing that the volume is lower than the optimal volume is accepted, according to the sound volume suitability information, first controller 42 of server 40 sends, to presentation device 20, setting information for setting the sound volume of the notification by presentation device 20 to be turned up. When the operation showing that the volume is the optimal volume is accepted, according to the sound volume suitability information, first controller 42 of server 40 performs nothing.

First UI 430 accepts, from a user, turning off a notification associated with one condition. First UI 430 includes checkbox 431 for accepting, from a user, turning off notification 401 that is included in one history 301. When OK button 440 is entered under a condition that checkbox 431 is checked, second controller 32 sends, to server 40 via second communicator 31, the turn-off information indicating that a notification corresponds to the one condition that is associated with notification 401 is turned off.

First controller 42 of server 40 that has received the turn-off information, does not send the notification to presentation device 20, even if first controller 42 obtains from appliance 10 an operation state that satisfies a condition associated with the notification indicated to be turned off in the turn-off information.

Second controller 32 **causes** display 34 to display UI 500 shown in FIG. 8. UI 500 includes switch 501 for accepting, from a user, turning off a plurality of first notifications 510, 520, 530, and 540 respectively associated with a plurality of first conditions. A plurality of first operation states of appliance 10, which respectively satisfy the plurality of first conditions respectively associated with a plurality of first notifications 510, 520, 530, and 540 relate to one another. The plurality of first notifications 510, 520, 530, and 540 **are** notifications that relate to notifications included in one history 301 that has been selected, for example. The operation states that relate to one another may be a plurality of operation states detected in the same operation. The operation states that relate to one another may be a plurality of operation states detected in a washing step in a washing machine, or may be a plurality of operation states detected in a drying step of the washing machine.

UI 500 includes switches 511, 521, 531, and 541 for setting turning on/off the plurality of first notifications 510, 520, 530, and 540, respectively.

UI 500 includes UI 550 and UI 560. UI 550 includes switch 551 for turning on/off a plurality of notifications included in the category relating to one history 301 that has been selected, at once. UI 560 includes switch 561 for accepting from a user, all together, turning on/off a plurality of notifications categorized in an appliance from which an operation state of one history 301 that has been selected is detected.

Second controller 32 causes display 34 to display the UI for accepting, from a user, the setting of turning on/off the notifications from the notified history, as described in relation to UI 200, 300, 400, and 500, which are shown in FIGS. 5 to 8. Second controller 32 also causes display 34 to display UI 600 for performing notification setting, as shown in FIG. 9.

UI 600 sets turning on/off each of a plurality of notifications in each appliance. UI 600 includes switch 611 for setting, at once, turning on/off the notifications from a washing machine, switch 612 for setting turning on/off each of one or more notifications from the washing machine, switch 621 for setting, at once, turning on/off notifications from a robot vacuum cleaner, and switch 622 for setting turning on/off each of one or more notifications from the robot vacuum cleaner.

### [3. Operation of presentation system]

Then, an operation of a presentation system is described.

FIG. 10 is a sequence diagram for presentation processing performed by the presentation system.

Appliance 10 detects an operation state of appliance 10 (Step S101).

Then, appliance 10 sends the detected operation state to server 40 (Step S102).

Server 40 obtains the operation state from appliance 10 (Step S103).

Subsequently, server 40 specifies a notification that has been associated in advance with a condition that is satisfied by the obtained operation state (Step S104).

Then, server 40 sends the specified notification to presentation device 20 (Step S105).

Then, server 40 stores a history of the notifications sent to presentation device 20 (Step S106).

Presentation device 20 obtains a notification from server 40 (Step S107).

Then, presentation device 20 presents the obtained notification (Step S108).

Subsequently, presentation device 20 sends a notification result of the presented notifications to server 40 (Step S109).

Server 40 reflects the notification result obtained from presentation device 20 (Step S110). Specifically, server 40 changes a result corresponding to the obtained notification result in the history stored in storage 43 to a value indicating that the notification is presented by presentation device 20.

FIG. 11 is a sequence diagram for notification setting processing performed by the presentation system.

Information terminal 30 creates a UI (Step S111), and causes display 34 to display the created UI (Step S112).

Subsequently, information terminal 30 accepts an operation for requesting a history of notifications, from a user (Step S113).

Then, information terminal 30 requires a history according to the operation (Step S114). In other words, information terminal 30 sends a request of the history to server 40.

Server 40 obtains the request of the history from information terminal 30 (Step S115).

Then, server 40 sends the history to information terminal 30 in response to the request of the history (Step S116).

Information terminal 30 obtains the history, and displays an UI including the obtained history (Step S117).

Subsequently, information terminal 30 accepts an operation of turning off a notification, from a user (Step S118).

Then, information terminal 30 sends turn-off information indicating that turning off the notification has been accepted, to server 40 (Step S119).

Server 40 receives the turn-off information (Step S120), and sets a notification indicated to be turned off in the turn-off information to be turned off (S121).

FIG. 12 is a sequence diagram that shows unconfirmation inquiry processing performed by the presentation system.

Processing in Steps S111 to S117 is the same as those shown in FIG. 11, so that description of the processing is omitted.

Subsequent to Step S117, information terminal 30 accepts an operation showing that the notification is not confirmed by a user (Step S131).

Then, information terminal 30 sends, to server 40, the unconfirmation information indicating that the notification is not confirmed by the user (Step S132).

Server 40 receives the unconfirmation information from information terminal 30 (Step S133).

Then, server 40 notifies information terminal 30 of availability of setting for resending a notification relating to the unconfirmation information (Step S134). According to the resending setting, a notification same as a notification relating to the unconfirmation information is sent again to presentation device 20.

Information terminal 30 notifies a user of the availability of the setting for resending the notification relating to the unconfirmation information (Step S135).

FIG. 13 is a sequence diagram for sound volume adjustment processing by the presentation system.

Processing in Steps S111 to S117 is the same as those shown in FIG. 11, so that description of the processing is omitted.

Information terminal 30 accepts, subsequent to Step S117, a sound volume suitability operation showing whether a sound volume of a notification presented by voice is an optimal volume, higher than the optimal volume, or lower than the optimal volume (Step S141).

Then, information terminal 30 sends, to server 40, sound volume suitability information that indicates the sound volume suitability operation (Step S142).

Server 40 receives the sound volume suitability information from information terminal 30 (Step S143).

Subsequently, server 40 sends, to presentation device 20, setting information determined based on the sound volume suitability information (Step S144).

Presentation device 20 receives the setting information from server 40 (Step S145).

Subsequently, presentation device 20 adjusts the sound volume of the notification according to the setting information (Step S146).

### [4. Effects and so on]

Presentation system 100 according to the present embodiment includes server 40, presentation device 20, and information terminal 30. Presentation device 20 and information terminal 30 are connected to server 40 via network 50. Server 40 includes first communicator 41, first controller 42, and storage 43. First communicator 41 communicates with presentation device 20 via network 50. First controller 42 sends, to presentation device 20 via first communicator 41, a notification that has been associated in advance with a condition satisfied by an operation state of appliance 10, which is obtained from appliance 10 via network 50. Storage 43 stores a history of notifications that have been sent to presentation device 20. Presentation device 20 receives a notification from server 40 via network 50, and presents the notification. Information terminal 30 includes display 34, acceptor 33, second communicator 31, and second controller 32. Acceptor 33 accepts an operation performed by a user. Second communicator 31 communicates with server 40 via network 50. Second controller 32 creates a user interface (UI) for accepting the operation, and causes display 34 to display the UI. Second controller 32 obtains the history from server 40 via second communicator 31. The UI includes the obtained history and accepts turning off a notification included in the history.

According to the above, the UI including the history accepts turning off the notification that is included in the history. Accordingly, a user can easily set the notification that is determined as unnecessary with reference to the history to be turned off.

In presentation system 100, if the operation accepted by acceptor 33 indicates turning off the notification, second communicator 32 sends turn-off information that indicates turning off the notification is accepted, to server 40 via second communicator 31. First controller 42 of server 40 that has received the turn-off information via first communicator 41 does not send a notification to presentation device 20, even if an operation state that satisfies a condition associated with the notification indicated to be turned off in the turn-off information is obtained from appliance 10.

Therefore, a user sets turning off the notification that is determined as unnecessary with reference to the history, so as to prevent the notification from being notified by presentation device 20.

Furthermore, in presentation system 100, the UI includes first UI 430 for accepting, from a user, turning off a notification associated with one condition. Therefore, a user can set to individually turn off each of the notifications.

Furthermore, in presentation system 100, UI includes second UI 220 for accepting, from a user, turning off a plurality of notifications respectively corresponding to a plurality of conditions, at once. Therefore, a user can set to turn off the plurality of notifications, at once.

Furthermore, in presentation system 100, the plurality of notifications include a plurality of first notifications. A plurality of first operation states of appliance 10, which satisfy a plurality of first conditions respectively associated with the plurality of first notifications, are operation states that are related with one another. Therefore, a user can set to turn off the plurality of first notifications related to one another, at once.

Furthermore, in presentation system 100, the plurality of notifications include a plurality of second notifications. A plurality of second operation states of appliance 10, which satisfy a plurality of second conditions respectively associated with the plurality of second notifications, are operation states that are each categorized in the corresponding one of the categories. Therefore, a user can set to turn off the plurality of second notifications categorized in each category, at once.

Furthermore, in presentation system 100, the plurality of notifications include a plurality of third notifications. A plurality of third operation states of appliance 10, which satisfy a plurality of third conditions respectively associated with the plurality of third notifications, are operation states that are each categorized in the corresponding one of the appliances. Therefore, a user can set to turn off the plurality of third notifications categorized in each appliance, at once.

Furthermore, in presentation system 100, the UI includes third UI 410 for accepting, from a user, whether the user has confirmed a presented notification. When the operation accepted by acceptor 33 shows that the notification is not confirmed, second controller 32 sends, to server 40 via second communicator 31, unconfirmation information indicating that the notification is not confirmed. First controller 42 of server 40 may send, to presentation device 20 or information terminal 30, a notification of notifying a user of availability of setting for resending the same notification to presentation device 20.

Accordingly, in a case when there is a notification that has not been confirmed by a user, the user can be notified of availability of setting for resending the same notification to presentation device 20. Therefore, it can be reduced that a notification necessary for a user is not confirmed.

Furthermore, in presentation system 100, presentation device 20 presents a notification by voice. The UI includes fourth UI 420 that accepts, from a user, a sound volume suitability operation that shows whether a sound volume of the notification presented by voice is an optimal volume, higher than the optimal volume, or lower than the optimal volume. Second controller 32 sends, to server 40 via second communicator 31, sound volume suitability information that indicates the sound volume suitability operation accepted by accepter 33. If the sound volume suitability information indicates the volume is higher than the optimal volume, first controller 42 of server 40 sends, to presentation device 20, setting information for setting the sound volume of the notification by presentation device 20 to be turned down. If the sound volume suitability information indicates the sound volume is lower than the optimal volume, first controller 42 sends, to presentation device 20, setting information for setting the sound volume of the notification by presentation device 20 to be turned up.

Accordingly, the sound volume of the notification by voice can be adjusted to a sound volume according to evaluation of the sound volume by a user. Therefore, the sound volume can be adjusted to a proper volume depending on users.

### [5. Modified example]

(1) Although information terminal 30 accepts setting of turning on/off a notification for a single user in the above embodiments, turning on/off a notification may be set for each one of a plurality of users. For example, presentation device 100 may include another information terminal connected to server 40 via network 50. The other information terminal includes another display, another acceptor for accepting another operation performed by another user, another second communicator that communicates with server 40 via network 50, and another second controller that creates another user interface (UI) for accepting another operation and allows the other display to display the other UI. The other second controller obtains a history from server 40 via another second communicator. The other UI includes the obtained history and accepts turning off a notification included in the obtained history, for the other user.
   In other words, information terminal 30 is a terminal for accepting setting of turning on/off a notification for a user, whereas the other information terminal accepts setting of turning on/off a notification for another user. Server 40 accepts setting of turning on/off the notification accepted from information terminal 30, as setting for the user. In addition, server 40 accepts setting of turning on/off the notification accepted from another information terminal, as setting for another user.
(2) Although presentation system 100 according to the embodiments described above includes, as an example, one appliance 10, presentation system 100 may include a plurality of appliances 10.
(3) In presentation system 100 according to the embodiments described above, information terminal 30 may have functions similarly to those of presenter 22 of presentation device 20. In other words, information terminal 30 may receive a notification from server 40, and may present the received notification to a user. Furthermore, presentation device 20 may have a function of providing a user with a UI that accepts setting of turning on/off a notification of information terminal 30.

### [Others]

In the embodiments and the modifications thereof, which are described above, each of the structural components may be configured by dedicated hardware or may be embodied by executing a software program suitable for each of the structural components. Each of the structural components may be embodied in a manner that a program executor, such as a CPU and a processor, reads and executes a software program recorded in a hard disk, a semiconductor memory, or such a recording medium.

As described above, embodiments are described as examples of the technique in the present disclosure. For the description, attached drawings and detailed description are provided.

Therefore, structural components described in the accompanying drawings and the detailed description may include not only structural components that are necessary for solving problems, but also structural components that are not necessary for solving the problems, for exemplifying the above technique. Accordingly, it should not be immediately recognized that those unnecessary structural components are necessary, based on that those unnecessary structural components are described in the accompanied drawings and the detailed description.

### [Industrial Applicability]

The present disclosure is applicable to, for example, a presentation system that allows a user to easily set turning off a notification.

### [Reference Signs List]

- 10: Appliance
- 11: Communicator
- 20: Presentation device
- 21: Communicator
- 22: Presenter
- 30: Information terminal
- 31: Second communicator
- 32: Second controller
- 33: Acceptor
- 34: Display
- 40: Server
- 41: First communicator
- 42: First controller
- 43: Storage
- 50: Network
- 100: Presentation system
- 200, 300, 400, 500, 600: UI

## Claims

1. A presentation system (100) that includes a server (40), a presentation device (20), and an information terminal (30), the presentation device (20) and the information terminal (30) being connected to the server (40) via a network (50),
the information terminal (30) includes:
a display (34);
an acceptor (33) that accepts an operation performed by a user;
a second communicator (31) that communicates with the server (40) via the network (50); and
a second controller (32) that creates a user interface (UI) for accepting the operation, and causes the display (34) to display the UI,
**characterized in that**
the second controller (32) obtains, from the server (40) via the second communicator (31), a history of a notification that has been sent to the presentation device (20) according to an operation state of each of one or more appliances (10), the operation state having been obtained from the one or more appliances (10) by the server (40) via the network (50), the history of the notification being presented by the presentation device (20); and
the UI includes the history obtained and accepts turning off the notification included in the history and presented by the presentation device (20), wherein
the server (40) includes:
a first communicator that communicates with the presentation device via the network (50);
a first controller that sends, to the presentation device via the first communicator (41), a notification that has been associated in advance with a condition satisfied by an operation state of each of one or more appliances (10), the operation state being obtained from a corresponding one of the one or more appliances (10) via the network (50); and
a storage (43) that stores a history of the notification having been sent to the presentation device (20), and
the presentation device (20) receives the notification from the server (40) via the network (50), and presents the notification and,
wherein
when the operation accepted by the acceptor (33) indicates turning off the notification, the second controller (32) sends, to the server (40) via the second communicator (31), turn-off information indicating that the turning off the notification has been accepted, and
when the first controller (42) of the server (40) obtains the turn-off information via the first communicator (41), the first controller (42) does not send the notification to the presentation device (20) even under a state that the operation state satisfying the condition associated with the notification indicated to be turned off in the turn-off information is obtained from the one or more appliances (10).

2. The presentation system according to claim 1, wherein
the UI includes a first UI for accepting, from a user, turning off a notification associated with a single condition.

3. The presentation system according to any one of claims 1 to 2, wherein
the UI includes a second UI for accepting, from a user, turning off a plurality of notifications respectively associated with a plurality of conditions, at once, the plurality of notifications including the notification, and the plurality of conditions including the condition.

4. The presentation system according to claim 3, wherein
the plurality of notifications include a plurality of first notifications, and
a plurality of first operation states of at least one of the one or more appliances relate to one another, each of the first operation states satisfying at least one of a plurality of first conditions respectively associated with the plurality of first notifications.

5. The presentation system according to claim 3 or 4, wherein
the plurality of notifications include a plurality of second notifications, and
a plurality of second operation states of at least one of the one or more appliances are each categorized in a corresponding one of categories, each of the second operation states satisfying at least one of a plurality of second conditions respectively associated with the plurality of second notifications.

6. The presentation system according to any one of claims 3 to 5, wherein
the plurality of notifications include a plurality of third notifications, and
a plurality of third operation states of at least one of the one or more appliances are each categorized in a corresponding one of the appliances, each of the third operation states satisfying at least one of a plurality of third conditions respectively associated with the plurality of third notifications.

7. The presentation system according to any one of claims 1 to 6, wherein
the UI includes a third UI for accepting, from a user, whether the notification presented has been confirmed,
when the operation accepted by the acceptor (33) shows that the notification has not been confirmed, the second controller (32) sends unconfirmation information indicating that the notification has not been confirmed, to the server (40) via the second communicator (31), and
the first controller (42) of the server (40) sends, to one of the presentation device (20) and the information terminal (30), a notification for notifying the user of availability of a setting for resending, to the presentation device (20), a notification same as the notification presented.

8. The presentation system according to any one of claims 1 to 7, wherein
the presentation device (20) presents the notification by voice,
the UI includes a fourth UI that accepts from a user a sound volume suitability operation that shows whether a sound volume of the notification presented by voice is an optimal volume, higher than the optimal volume, or lower than the optimal volume,
the second controller (32) sends sound volume suitability information that indicates the sound volume suitability operation accepted by the acceptor (33), to the server (40) via the second communicator (31), and
the first controller (42) of the server (40):
sends, to the presentation device (20), setting information for setting the sound volume of the notification by the presentation device to be turned down, when the sound volume suitability information indicates that the sound volume is higher than the optimal volume; and
sends, to the presentation device (20), setting information for setting the sound volume of the notification by the presentation device (20) to be turned up, when the sound volume suitability information indicates that the sound volume is lower than the optimal volume.

9. The presentation system according to any one of claims 1 to 8, further comprising:
another information terminal that is connected to the server (40) via the network, wherein
the other information terminal includes:
another display;
another acceptor that accepts another operation performed by another user;
another second communicator that communicates with the server via the network; and
another second controller that creates another user interface (UI) for accepting the other operation, and causes the other display to display the other UI,
the other second controller obtains the history from the server via the other second communicator, and
the other UI includes the history obtained and accepts the turning off a notification included in the history, for the other user.

10. A presentation method performed by a presentation system (100) that includes a server (40), a presentation device (20), and an information terminal (30), the presentation device (20) and the information terminal (30) being connected to the server (40) via a network (50),
the presentation method comprising:
creating, by the information terminal (30), a user interface (UI) for the information terminal (30) to accept an operation performed by a user, and causing, by the information terminal (30), a display (34) to display the UI, the display (34) being included in the information terminal (30); and
obtaining, by the information terminal (30), from the server (40), a history of a notification that has been sent to the presentation device (20) according to an operation state of each of one or more appliances (10), the operation state having been obtained from the one or more appliances (10) by the server (40) via the network (50), wherein
the UI includes the history obtained, and accepts turning off the notification included in the history and presented by the presentation device (20),
wherein
the server (40) includes:
a first communicator that communicates with the presentation device via the network (50);
sending, by a first controller, to the presentation device via the first communicator (41), a notification that has been associated in advance with a condition satisfied by an operation state of each of one or more appliances (10), the operation state being obtained from a corresponding one of the one or more appliances (10) via the network (50); and
storing a history of the notification having been sent to the presentation device (20),
receiving the notification from the server (40) via the network (50), and presenting the notification, wherein
when the operation accepted by the acceptor (33) indicates turning off the notification, send, by the second controller (32), to the server (40) via the second communicator (31), turn-off information indicating that the turning off the notification has been accepted, and
when the first controller (42) of the server (40) obtains the turn-off information via the first communicator (41), the first controller (42) does not send the notification to the presentation device (20) even under a state that the operation state satisfying the condition associated with the notification indicated to be turned off in the turn-off information is obtained from the one or more appliances (10).

## Patentansprüche

1. Präsentationssystem (100), das einen Server (40), eine Präsentationsvorrichtung (20) und ein Informationsendgerät (30) umfasst, wobei die Präsentationsvorrichtung (20) und das Informationsendgerät (30) über ein Netzwerk (50) mit dem Server (40) verbunden sind,
wobei das Informationsendgerät (30) umfasst:
eine Anzeige (34);
eine Annahmeeinheit (33), die eine von einem Benutzer durchgeführte Operation annimmt;
eine zweite Kommunikationseinheit (31), die über das Netzwerk (50) mit dem Server (40) kommuniziert; und
eine zweite Steuereinheit (32), die eine Benutzerschnittstelle (UI) zum Annehmen der Operation erstellt und die Anzeige (34) veranlasst, die UI anzuzeigen,
**dadurch gekennzeichnet, dass**
die zweite Steuereinheit (32) von dem Server (40) über die zweite Kommunikationseinheit (31) eine Historie einer Benachrichtigung erhält, die gemäß einem Betriebszustand jedes von einem oder mehreren Geräten (10) an die Präsentationsvorrichtung (20) gesendet worden ist, wobei der Betriebszustand von dem einen oder den mehreren Geräten (10) durch den Server (40) über das Netzwerk (50) erhalten worden ist, wobei die Historie der Benachrichtigung durch die Präsentationsvorrichtung (20) präsentiert wird; und
die UI die erhaltene Historie umfasst und das Ausschalten der Benachrichtigung annimmt, die in der Historie enthalten ist und durch die Präsentationsvorrichtung (20) präsentiert wird, wobei der Server (40) umfasst:
eine erste Kommunikationseinheit, die mit der Präsentationsvorrichtung über das Netzwerk (50) kommuniziert;
eine erste Steuereinheit, die an die Präsentationsvorrichtung über die erste Kommunikationseinheit (41) eine Benachrichtigung sendet, die im Voraus mit einer Bedingung verknüpft worden ist, die durch einen Betriebszustand jedes von einem oder mehreren Geräten (10) erfüllt wird, wobei der Betriebszustand von einem entsprechenden Gerät des einen oder der mehreren Geräte (10) über das Netzwerk (50) erhalten wird; und
einen Speicher (43), der eine Historie der Benachrichtigung speichert, die an die Präsentationsvorrichtung (20) gesendet worden ist, und
die Präsentationsvorrichtung (20) die Benachrichtigung von dem Server (40) über das Netzwerk (50) empfängt und die Benachrichtigung präsentiert und, wobei
wenn die von der Annahmeeinheit (33) angenommene Operation das Ausschalten der Benachrichtigung angibt, die zweite Steuereinheit (32) an den Server (40) über die zweite Kommunikationseinheit (31) eine Ausschaltinformation sendet, die angibt, dass das Ausschalten der Benachrichtigung angenommen worden ist, und
wenn die erste Steuereinheit (42) des Servers (40) die Ausschaltinformation über die erste Kommunikationseinheit (41) erhält, die erste Steuereinheit (42) die Benachrichtigung nicht an die Präsentationsvorrichtung (20) sendet, selbst in einem Zustand, in dem der Betriebszustand, der die mit der Benachrichtigung verknüpfte Bedingung erfüllt, die in der Ausschaltinformation als auszuschalten angegeben ist, von dem einen oder den mehreren Geräten (10) erhalten wird.

2. Präsentationssystem nach Anspruch 1, wobei
die UI eine erste UI zum Annehmen, von einem Benutzer, des Ausschaltens einer Benachrichtigung umfasst, die einer einzelnen Bedingung zugeordnet ist.

3. Präsentationssystem nach einem der Ansprüche 1 bis 2, wobei
die UI eine zweite UI zum Annehmen, von einem Benutzer, des Ausschaltens einer Vielzahl von Benachrichtigungen, die jeweils einer Vielzahl von Bedingungen zugeordnet sind, auf einmal umfasst, wobei die Vielzahl von Benachrichtigungen die Benachrichtigung umfasst und die Vielzahl von Bedingungen die Bedingung umfasst.

4. Präsentationssystem nach Anspruch 3, wobei
die Vielzahl von Benachrichtigungen eine Vielzahl von ersten Benachrichtigungen umfasst, und eine Vielzahl von ersten Betriebszuständen mindestens eines des einen oder der mehreren Geräte in Beziehung zueinander stehen, wobei jeder der ersten Betriebszustände mindestens eine einer Vielzahl von ersten Bedingungen erfüllt, die jeweils der Vielzahl von ersten Benachrichtigungen zugeordnet sind.

5. Präsentationssystem nach Anspruch 3 oder 4, wobei
die Vielzahl von Benachrichtigungen eine Vielzahl von zweiten Benachrichtigungen umfasst, und eine Vielzahl von zweiten Betriebszuständen mindestens eines des einen oder der mehreren Geräte jeweils in eine entsprechende Kategorie von Kategorien kategorisiert sind, wobei jeder der zweiten Betriebszustände mindestens eine einer Vielzahl von zweiten Bedingungen erfüllt, die jeweils der Vielzahl von zweiten Benachrichtigungen zugeordnet sind.

6. Präsentationssystem nach einem der Ansprüche 3 bis 5, wobei
die Vielzahl von Benachrichtigungen eine Vielzahl von dritten Benachrichtigungen umfasst, und eine Vielzahl von dritten Betriebszuständen mindestens eines des einen oder der mehreren Geräte jeweils in ein entsprechendes Gerät der Geräte kategorisiert sind, wobei jeder der dritten Betriebszustände mindestens eine einer Vielzahl von dritten Bedingungen erfüllt, die jeweils der Vielzahl von dritten Benachrichtigungen zugeordnet sind.

7. Präsentationssystem nach einem der Ansprüche 1 bis 6, wobei
die UI eine dritte UI umfasst, um von einem Benutzer anzunehmen, ob die präsentierte Benachrichtigung bestätigt worden ist,
wenn die von der Annahmeeinheit (33) angenommene Operation zeigt, dass die Benachrichtigung nicht bestätigt worden ist, die zweite Steuereinheit (32) Nichtbestätigungsinformation, die angibt, dass die Benachrichtigung nicht bestätigt worden ist, an den Server (40) über die zweite Kommunikationseinheit (31) sendet, und
die erste Steuereinheit (42) des Servers (40) an eines von der Präsentationsvorrichtung (20) und dem Informationsendgerät (30) eine Benachrichtigung zum Benachrichtigen des Benutzers über die Verfügbarkeit einer Einstellung zum erneuten Senden einer Benachrichtigung, die identisch mit der präsentierten Benachrichtigung ist, an die Präsentationsvorrichtung (20) sendet.

8. Präsentationssystem nach einem der Ansprüche 1 bis 7, wobei
die Präsentationsvorrichtung (20) die Benachrichtigung durch Sprache präsentiert,
die UI eine vierte UI umfasst, die von einem Benutzer eine Lautstärke-Eignungsoperation annimmt, die zeigt, ob eine Lautstärke der durch Sprache präsentierten Benachrichtigung eine optimale Lautstärke, höher als die optimale Lautstärke oder niedriger als die optimale Lautstärke ist,
die zweite Steuereinheit (32) Lautstärke-Eignungsinformation, die die von der Annahmeeinheit (33) angenommene Lautstärke-Eignungsoperation angibt, an den Server (40) über die zweite Kommunikationseinheit (31) sendet, und
die erste Steuereinheit (42) des Servers (40):
an die Präsentationsvorrichtung (20) Einstellungsinformation zum Einstellen der Lautstärke der Benachrichtigung durch die Präsentationsvorrichtung, sodass sie verringert wird, sendet, wenn die Lautstärke-Eignungsinformation angibt, dass die Lautstärke höher als die optimale Lautstärke ist; und
an die Präsentationsvorrichtung (20) Einstellungsinformation zum Einstellen der Lautstärke der Benachrichtigung durch die Präsentationsvorrichtung (20), sodass sie erhöht wird, sendet, wenn die Lautstärke-Eignungsinformation angibt, dass die Lautstärke niedriger als die optimale Lautstärke ist.

9. Präsentationssystem nach einem der Ansprüche 1 bis 8, ferner umfassend:
ein weiteres Informationsendgerät, das über das Netzwerk mit dem Server (40) verbunden ist, wobei das weitere Informationsendgerät umfasst:
eine weitere Anzeige;
eine weitere Annahmeeinheit, die eine weitere von einem weiteren Benutzer durchgeführte Operation annimmt;
eine weitere zweite Kommunikationseinheit, die über das Netzwerk mit dem Server kommuniziert; und
eine weitere zweite Steuereinheit, die eine weitere Benutzerschnittstelle (UI) zum Annehmen der weiteren Operation erstellt und die weitere Anzeige veranlasst, die weitere UI anzuzeigen,
wobei die weitere zweite Steuereinheit die Historie von dem Server über die weitere zweite Kommunikationseinheit erhält, und
die weitere UI die erhaltene Historie umfasst und das Ausschalten einer in der Historie enthaltenen Benachrichtigung für den weiteren Benutzer annimmt.

10. Präsentationsverfahren, das von einem Präsentationssystem (100) durchgeführt wird, das einen Server (40), eine Präsentationsvorrichtung (20) und ein Informationsendgerät (30) umfasst, wobei die Präsentationsvorrichtung (20) und das Informationsendgerät (30) über ein Netzwerk (50) mit dem Server (40) verbunden sind,
wobei das Präsentationsverfahren umfasst:
Erstellen, durch das Informationsendgerät (30), einer Benutzerschnittstelle (UI), damit das Informationsendgerät (30) eine von einem Benutzer durchgeführte Operation annimmt, und Veranlassen, durch das Informationsendgerät (30), einer Anzeige (34), die UI anzuzeigen, wobei die Anzeige (34) in dem Informationsendgerät (30) enthalten ist; und
Erhalten, durch das Informationsendgerät (30), von dem Server (40), einer Historie einer Benachrichtigung, die gemäß einem Betriebszustand jedes von einem oder mehreren Geräten (10) an die Präsentationsvorrichtung (20) gesendet worden ist, wobei der Betriebszustand von dem einen oder den mehreren Geräten (10) durch den Server (40) über das Netzwerk (50) erhalten worden ist, wobei die UI die erhaltene Historie umfasst und das Ausschalten der Benachrichtigung annimmt, die in der Historie enthalten ist und durch die Präsentationsvorrichtung (20) präsentiert wird,
wobei
der Server (40) umfasst:
eine erste Kommunikationseinheit, die mit der Präsentationsvorrichtung über das Netzwerk (50) kommuniziert;
Senden, durch eine erste Steuereinheit, an die Präsentationsvorrichtung über die erste Kommunikationseinheit (41), einer Benachrichtigung, die im Voraus mit einer Bedingung verknüpft worden ist, die durch einen Betriebszustand jedes von einem oder mehreren Geräten (10) erfüllt wird, wobei der Betriebszustand von einem entsprechenden Gerät des einen oder der mehreren Geräte (10) über das Netzwerk (50) erhalten wird; und
Speichern einer Historie der Benachrichtigung, die an die Präsentationsvorrichtung (20) gesendet worden ist,
Empfangen der Benachrichtigung von dem Server (40) über das Netzwerk (50) und Präsentieren der Benachrichtigung, wobei
wenn die von der Annahmeeinheit (33) angenommene Operation das Ausschalten der Benachrichtigung angibt, Senden, durch die zweite Steuereinheit (32), an den Server (40) über die zweite Kommunikationseinheit (31), einer Ausschaltinformation, die angibt, dass das Ausschalten der Benachrichtigung angenommen worden ist, und
wenn die erste Steuereinheit (42) des Servers (40) die Ausschaltinformation über die erste Kommunikationseinheit (41) erhält, die erste Steuereinheit (42) die Benachrichtigung nicht an die Präsentationsvorrichtung (20) sendet, selbst in einem Zustand, in dem der Betriebszustand, der die mit der Benachrichtigung verknüpfte Bedingung erfüllt, die in der Ausschaltinformation als auszuschalten angegeben ist, von dem einen oder den mehreren Geräten (10) erhalten wird.

## Revendications

1. Système de présentation (100) qui comprend un serveur (40), un dispositif de présentation (20) et un terminal d'information (30), le dispositif de présentation (20) et le terminal d'information (30) étant connectés au serveur (40) via un réseau (50),
le terminal d'information (30) comprend :
un afficheur (34) ;
un accepteur (33) qui accepte une opération effectuée par un utilisateur ;
un deuxième communicateur (31) qui communique avec le serveur (40) via le réseau (50) ; et
un deuxième contrôleur (32) qui crée une interface utilisateur (UI) pour accepter l'opération, et amène l'afficheur (34) à afficher l'UI,
**caractérisé en ce que**
le deuxième contrôleur (32) obtient, à partir du serveur (40) via le deuxième communicateur (31), un historique d'une notification qui a été envoyée au dispositif de présentation (20) selon un état de fonctionnement de chacun d'un ou plusieurs appareils (10), l'état de fonctionnement ayant été obtenu à partir du ou des appareils (10) par le serveur (40) via le réseau (50), l'historique de la notification étant présenté par le dispositif de présentation (20) ; et
l'UI comprend l'historique obtenu et accepte la désactivation de la notification incluse dans l'historique et présentée par le dispositif de présentation (20), dans lequel
le serveur (40) comprend :
un premier communicateur qui communique avec le dispositif de présentation via le réseau (50) ;
un premier contrôleur qui envoie, au dispositif de présentation via le premier communicateur (41), une notification qui a été associée à l'avance à une condition satisfaite par un état de fonctionnement de chacun d'un ou plusieurs appareils (10), l'état de fonctionnement étant obtenu à partir d'un appareil correspondant parmi le ou les appareils (10) via le réseau (50) ; et
une mémoire (43) qui stocke un historique de la notification ayant été envoyée au dispositif de présentation (20), et
le dispositif de présentation (20) reçoit la notification à partir du serveur (40) via le réseau (50), et présente la notification et, dans lequel
lorsque l'opération acceptée par l'accepteur (33) indique la désactivation de la notification, le deuxième contrôleur (32) envoie, au serveur (40) via le deuxième communicateur (31), des informations de désactivation indiquant que la désactivation de la notification a été acceptée, et
lorsque le premier contrôleur (42) du serveur (40) obtient les informations de désactivation via le premier communicateur (41), le premier contrôleur (42) n'envoie pas la notification au dispositif de présentation (20) même dans un état dans lequel l'état de fonctionnement satisfaisant la condition associée à la notification indiquée devant être désactivée dans les informations de désactivation est obtenu à partir du ou des appareils (10).

2. Système de présentation selon la revendication 1, dans lequel
l'UI comprend une première UI pour accepter, de la part d'un utilisateur, la désactivation d'une notification associée à une condition unique.

3. Système de présentation selon l'une quelconque des revendications 1 à 2, dans lequel
l'UI comprend une deuxième UI pour accepter, de la part d'un utilisateur, la désactivation d'une pluralité de notifications respectivement associées à une pluralité de conditions, en une fois, la pluralité de notifications incluant la notification, et la pluralité de conditions incluant la condition.

4. Système de présentation selon la revendication 3, dans lequel
la pluralité de notifications comprend une pluralité de premières notifications, et
une pluralité de premiers états de fonctionnement d'au moins un du ou des appareils sont liés les uns aux autres, chacun des premiers états de fonctionnement satisfaisant au moins une d'une pluralité de premières conditions respectivement associées à la pluralité de premières notifications.

5. Système de présentation selon la revendication 3 ou 4, dans lequel
la pluralité de notifications comprend une pluralité de deuxièmes notifications, et
une pluralité de deuxièmes états de fonctionnement d'au moins un du ou des appareils sont chacun catégorisés dans une catégorie correspondante parmi des catégories, chacun des deuxièmes états de fonctionnement satisfaisant au moins une d'une pluralité de deuxièmes conditions respectivement associées à la pluralité de deuxièmes notifications.

6. Système de présentation selon l'une quelconque des revendications 3 à 5, dans lequel
la pluralité de notifications comprend une pluralité de troisièmes notifications, et
une pluralité de troisièmes états de fonctionnement d'au moins un du ou des appareils sont chacun catégorisés dans un appareil correspondant parmi les appareils, chacun des troisièmes états de fonctionnement satisfaisant au moins une d'une pluralité de troisièmes conditions respectivement associées à la pluralité de troisièmes notifications.

7. Système de présentation selon l'une quelconque des revendications 1 à 6, dans lequel
l'UI comprend une troisième UI pour accepter, de la part d'un utilisateur, si la notification présentée a été confirmée,
lorsque l'opération acceptée par l'accepteur (33) montre que la notification n'a pas été confirmée, le deuxième contrôleur (32) envoie des informations de non-confirmation indiquant que la notification n'a pas été confirmée, au serveur (40) via le deuxième communicateur (31), et
le premier contrôleur (42) du serveur (40) envoie, à l'un du dispositif de présentation (20) et du terminal d'information (30), une notification pour notifier à l'utilisateur la disponibilité d'un réglage pour renvoyer, au dispositif de présentation (20), une notification identique à la notification présentée.

8. Système de présentation selon l'une quelconque des revendications 1 à 7, dans lequel
le dispositif de présentation (20) présente la notification par la voix,
l'UI comprend une quatrième UI qui accepte de la part d'un utilisateur une opération d'adéquation du volume sonore qui montre si un volume sonore de la notification présentée par la voix est un volume optimal, supérieur au volume optimal, ou inférieur au volume optimal,
le deuxième contrôleur (32) envoie des informations d'adéquation du volume sonore qui indiquent l'opération d'adéquation du volume sonore acceptée par l'accepteur (33), au serveur (40) via le deuxième communicateur (31), et
le premier contrôleur (42) du serveur (40) :
envoie, au dispositif de présentation (20), des informations de réglage pour régler le volume sonore de la notification par le dispositif de présentation afin qu'il soit baissé, lorsque les informations d'adéquation du volume sonore indiquent que le volume sonore est supérieur au volume optimal ; et
envoie, au dispositif de présentation (20), des informations de réglage pour régler le volume sonore de la notification par le dispositif de présentation (20) afin qu'il soit augmenté, lorsque les informations d'adéquation du volume sonore indiquent que le volume sonore est inférieur au volume optimal.

9. Système de présentation selon l'une quelconque des revendications 1 à 8, comprenant en outre :
un autre terminal d'information qui est connecté au serveur (40) via le réseau, dans lequel
l'autre terminal d'information comprend :
un autre afficheur ;
un autre accepteur qui accepte une autre opération effectuée par un autre utilisateur ;
un autre deuxième communicateur qui communique avec le serveur via le réseau ; et
un autre deuxième contrôleur qui crée une autre interface utilisateur (UI) pour accepter l'autre opération, et amène l'autre afficheur à afficher l'autre UI,
l'autre deuxième contrôleur obtient l'historique à partir du serveur via l'autre deuxième communicateur, et
l'autre UI comprend l'historique obtenu et accepte la désactivation d'une notification incluse dans l'historique, pour l'autre utilisateur.

10. Procédé de présentation exécuté par un système de présentation (100) qui comprend un serveur (40), un dispositif de présentation (20) et un terminal d'information (30), le dispositif de présentation (20) et le terminal d'information (30) étant connectés au serveur (40) via un réseau (50),
le procédé de présentation comprenant :
créer, par le terminal d'information (30), une interface utilisateur (UI) pour que le terminal d'information (30) accepte une opération effectuée par un utilisateur, et amener, par le terminal d'information (30), un afficheur (34) à afficher l'UI, l'afficheur (34) étant inclus dans le terminal d'information (30) ; et
obtenir, par le terminal d'information (30), à partir du serveur (40), un historique d'une notification qui a été envoyée au dispositif de présentation (20) selon un état de fonctionnement de chacun d'un ou plusieurs appareils (10), l'état de fonctionnement ayant été obtenu à partir du ou des appareils (10) par le serveur (40) via le réseau (50), dans lequel
l'UI comprend l'historique obtenu, et accepte la désactivation de la notification incluse dans l'historique et présentée par le dispositif de présentation (20),
dans lequel
le serveur (40) comprend :
un premier communicateur qui communique avec le dispositif de présentation via le réseau (50) ;
envoyer, par un premier contrôleur, au dispositif de présentation via le premier communicateur (41), une notification qui a été associée à l'avance à une condition satisfaite par un état de fonctionnement de chacun d'un ou plusieurs appareils (10), l'état de fonctionnement étant obtenu à partir d'un appareil correspondant parmi le ou les appareils (10) via le réseau (50) ; et
stocker un historique de la notification ayant été envoyée au dispositif de présentation (20),
recevoir la notification à partir du serveur (40) via le réseau (50), et présenter la notification, dans lequel
lorsque l'opération acceptée par l'accepteur (33) indique la désactivation de la notification, envoyer, par le deuxième contrôleur (32), au serveur (40) via le deuxième communicateur (31), des informations de désactivation indiquant que la désactivation de la notification a été acceptée, et
lorsque le premier contrôleur (42) du serveur (40) obtient les informations de désactivation via le premier communicateur (41), le premier contrôleur (42) n'envoie pas la notification au dispositif de présentation (20) même dans un état dans lequel l'état de fonctionnement satisfaisant la condition associée à la notification indiquée devant être désactivée dans les informations de désactivation est obtenu à partir du ou des appareils (10).
